(19)

Europäisches
Patentamt
European
Patent Office
Office européen
des brevets

(11) **EP 4 195 109 A1**

(12) **EUROPEAN PATENT APPLICATION**

(43) Date of publication:
**14.06.2023 Bulletin 2023/24**

(21) Application number: **22207426.2**

(22) Date of filing: **15.11.2022**

(51) International Patent Classification (IPC):
**G06N 3/0895** $^{(2023.01)}$      **G06N 3/09** $^{(2023.01)}$
**G06N 20/00** $^{(2019.01)}$

(52) Cooperative Patent Classification (CPC):
**G06N 3/0895; G06N 3/09; G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.11.2021 EP 21208270**

(71) Applicant: **Honda Research Institute Europe
GmbH
63073 Offenbach/Main (DE)**

(72) Inventor: **Losing, Viktor
63073 Offenbach/Main (DE)**

(74) Representative: **Beder, Jens et al
Mitscherlich PartmbB
Patent- und Rechtsanwälte
Sonnenstraße 33
80331 München (DE)**

(54) **ONLINE TIME-SERIES CLASSIFICATION WITH RETROSPECTIVE SELF-TRAINING**

(57)    The present invention relates to a method for classifying time-series data comprising classifying (S2) the time-series data by a real-time classification using a real-time classification model pre-trained based on labeled data, buffering (S4) the time-series data that has already been classified by the real-time classification and optimizing (S5) the real-time classification model during the real-time classification by generating pseudo-labeled data by semi-supervised learning based on the labeled data and the buffered time-series data and retraining the real-time classification model based on the labeled data and the pseudo-labeled data.

Fig. 6

**Description**

The present invention relates to the technical field of machine learning, and more particularly, to a data classification method and system based on machine learning.

Real-time classification of time-series data (sequential data) becomes essential for an increasing amount of machine learning applications. For instance, the classification or prediction of specific events enables systems to react in real-time to specific patterns in the data stream and can directly be used to guide the control of a given hardware.

A concrete example is to operate assistive devices such as exoskeletons or prostheses based on the recognition or prediction of performed human motions. Machine learning models associated with such devices are usually trained on large amounts of labeled/classified data. However, when the device with the trained real-time classification model is then delivered to the end user the performance of such device can be poor if the application environment is not well represented in the training data. This can happen because human behavior, preferences and environment can be highly individual.

It is an object of the present invention to provide a method and system, which reduce the above problems. In particular, an object of the present invention is to provide a computer program product, a computer-implemented method and a real-time classification system, with which the real-time classification model can be easily adapted to a specific application environment.

This object is achieved by a method, a program and a system according to the enclosed independent claims. Advantageous features of the present invention are defined in the corresponding dependent claims.

According to the present invention, a computer-implemented method for classifying time-series data performed by an apparatus comprises a step of classifying the time-series data by a real-time classification using a real-time classification model pre-trained based on labeled data, a step of buffering the time-series data that has already been classified by the real-time classification and a step of optimizing the real-time classification model during the real-time classification by generating pseudo-labeled data by semi-supervised learning based on the labeled data and the buffered time-series data and retraining the real-time classification model based on the labeled data and the pseudo-labeled data.

Since the real-time classification model is retrained using the labeled data, with which the real-time classification model was initially trained, and pseudo-labeled data obtained by semi-supervised learning with time-series data generated in the specific/real application environment, the real-time classification model can be easily adapted to the application environment.

The pseudo-labeled data can be generated by an iterative self-training process to obtain accurate pseudo-labeled data for unlabeled data, i.e., the buffered time-series data.

In the iterative self-training process, a retrospective model classifying a sample $\tilde{x}_t$ of the buffered time-series data based on the labeled data and samples $\tilde{x}_{t-l}$, ... , $\tilde{x}_t$ ... , $\tilde{x}_{t+m}$ of the buffered time-series data can be retrained, where m and l are parameters set based on, for example, the type of the time series data, desired classification accuracy and/or computational effort. The term retrospective of the retrospective model refers to its capability to classify a data sample $\tilde{x}_t$ in hindsight, wherein, the delay $t + m$ allows the model to classify, for example, current human motion with information about how the motion progresses after the query time t. This is the main advantage over the real-time classification model, which can only classify a data sample $\tilde{x}_t$ based on past samples $\tilde{x}_{t-l}$, ...,, ..., $\tilde{x}_t$.

With the retrospective model, accurate pseudo-labels can be generated. The generated pseudo labels are used to improve the real-time classification model. Thus, there is a blend between offline and online-time series classification models combined this with self-training. The terms online classification and real-time classification are used interchangeably to refer to the continuous and instant classification of time-series data. In particular, online time series classification is not to be confused with online machine learning where methods are aiming to create dynamic models that are continuously learning on a data stream. The initial real-time classification model and the initial retrospective model are obtained by offline machine learning.

The retrospective model can be retrained every time classification confidence of the time-series data classified by the retrospective model surpasses a predefined threshold and/or the user can manually trigger the retraining process based on his evaluation of the classification.

The iterative self-training process can be stopped when all buffered time-series data have been classified or after a predefined number of maximum iterations.

The generation of the pseudo-labeled data can be triggered periodically at certain times. Alternatively or in addition, the method can comprise a step of evaluating the real-time classification, wherein the generation of the pseudo-labeled data is triggered based on the result of the evaluation. The evaluation can be performed continuously or at certain times.

In the step of evaluating the real-time classification, the performance of a system (hardware) that is controlled based on the real-time classification can be determined. The performance can be determined based on user feedback/ranking. Alternatively or in addition, time series data and its classification can be output for user review. For example, past motions (e.g., using skeleton data from the user) and the estimated labels can be visualized and the user or another human can be asked to correct or validate these labels. Based on a collection of such validated examples a system performance/accuracy can be estimated in order to evaluate the real-time classification.

The time-series data can be generated by at least one sensor or an inertial measurement unit (IMU) measuring linear and/or angular motions of at least one human body segment, wherein the method comprises a step of receiving the generated time-series data or a step of generating the time-series data by the sensor or the inertial measurement unit and in the classifying step, the current movement that the human is performing or an upcoming movement of the human is classified.

In addition, the method can comprise a step of controlling a powered exoskeleton or an electric prosthesis based on the result of the classification and/or a step of outputting the result of the classification.

According to the present invention, a program that, when running on a computer or loaded onto a computer, causes the computer to execute the steps of:

- classifying the time-series data by a real-time classification using a real-time classification model pre-trained based on labeled data,
- buffering the time-series data that have already been classified by the real-time classification and
- optimizing the real-time classification model during the real-time classification by generating pseudo-labeled data by semi-supervised learning based on the labeled data and the buffered time-series data and retraining the real-time classification model based on the labeled data and the pseudo-labeled data.

According to the present invention, a system for classifying time-series data comprises means for classifying the time-series data by a real-time classification using a real-time classification model pre-trained based on labeled data, means for buffering the time-series data that has already been classified by the real-time classification and means for optimizing the real-time classification model during the real-time classification, wherein the optimizing means is configured to generate pseudo-labeled data by semi-supervised learning based on the labeled data and the buffered time-series data and to retrain the real-time classification model based on the labeled data and the pseudo-labeled data.

In addition, the system can comprise an inertial measurement unit (IMU) or at least one sensor for continuous measurement of linear and/or angular motions performed by at least one human body segment and generating time-series data based on the continuous measurement, wherein the classifying means is configured to classify the current movement that the human is performing or an upcoming movement of the human. Alternatively or in addition, at least one human body segment can be captured by at least one camera that outputs a sequence of images (video signal) as time series data, wherein the image(s) captured at the time $t$ and/or data measured at time $t$ form a feature vector classified by the classifying means.

In addition, the system can comprise an exoskeleton or an electric prosthesis and a control means for controlling the exoskeleton or the electric prosthesis based on the result of the classification.

Another application area is the use of the real-time classification in a driver assistance system to provide additional context information for a driver of a vehicle in complex traffic situations. For instance, the driver intent at intersections (e.g., turning or driving straight) can be classified by the system based on time-series data received from sensors sensing the driver, the vehicle and/or the environment of the vehicle. Based on the driver intent, upcoming conflicts with other traffic participants can be determined to issue warnings, enabling a focused and preventive support.

The real-time classification can be evaluated by comparing, for example, the classified/predicted movement and the executed movement or the classified/predicted driver action and the executed driver action, wherein the generation of the pseudo-labeled data is triggered based on the result of the evaluation.

The system and/or any of the functions described herein may be implemented using individual hardware circuitry, using software functioning in conjunction with at least one of a programmed microprocessor, a general purpose computer, using an application specific integrated circuit (ASIC) and using one or more digital signal processors (DSPs).

Embodiments of the invention are discussed in detail with reference to the enclosed figures, in which

Fig. 1 shows a schematic of a system according to an embodiment of the present invention,

Fig. 2 shows a simplified flow chart to illustrate the main method steps according to the present invention,

Fig. 3 shows a first algorithm for the self-training procedure,

Fig. 4 shows a second algorithm for the incremental self-training,

Fig. 5 shows scheme of the two-staged process for static self-training, and

Fig. 6 shows scheme of incremental self-training based on a growing set of pseudo-labeled data according to an embodiment of the present invention.

In the figures, same reference numbers denote same or equivalent structures. The explanation of structures with same reference numbers in different figures is avoided where deemed possible for sake of conciseness.

The present invention relates to real-time classification of time-series data. The conventional approach to perform real-time classification is to simply apply offline time-series classification methods in the online setting. However, the offline scenario is substantially different as it assumes the data can be processed and evaluated in hindsight, which implies the whole data stream can be accessed to classify any data segment and the corresponding computational costs are negligible. In addition, it is usually assumed that the data stream is already partitioned in segments of equal size, with each segment containing only data of one class. All these assumptions do not apply in the online setting and there is a lack of dedicated methods that are specifically designed to cope with the mentioned constraints.

One general challenge of applying machine-learning algorithms, in particular in the case of deep learning, is the increasing demand for large amounts of labeled data. As the majority of labeled data is still manually annotated by humans, the process of constructing large labeled data sets is time consuming and expensive. Semi-supervised learning is one way to reduce the labeling burden as it leverages unlabeled data to improve the generalization capability.

One specific type of semi-supervised learning is self-labeling/self-training, also known as pseudo labeling or wrapper methods. The general concept is to train a model on labeled data and predict the labels of unlabeled data, often termed as pseudo labels. Subsequently, a new model is trained with the labeled and pseudo-labeled data and applied on the test data to achieve a performance gain. Self-training performs this process in an iterative way, continuously harnessing the pseudo labels of data points the model was highly confident at.

In a preferred embodiment of the invention, self-training is specifically designed for the online time-series classification problem, wherein a model that performs the classification of the unlabeled data in retrospective is trained and the resulting pseudo-labels are used to improve the online time-series classification model. The approach is independent from specific learning algorithms as it is based on the general principle that more information about the time series likely enables a better classification performance. The approach is evaluated in two different schemes, the classical static inductive scheme of self-labeling, as well as an incremental one that aims for continuous personalization solely based on pseudo-labeled data.

The term personalization refers to the adaptation of machine learning models to a specific user. In case of human motion data, such an adaptation may capture highly individual motion patterns that otherwise would be misclassified. This is highly relevant, considering the fact that most assistive devices are exclusively used by one user.

In both evaluation schemes, different learning algorithms are applied on multiple real-world data sets to highlight the general applicability of the approach. Experiments show that this approach often provides significant improvements over models using common self-training and that incremental personalization with pseudo-labeled data is beneficial even in the case of large amounts of labeled data.

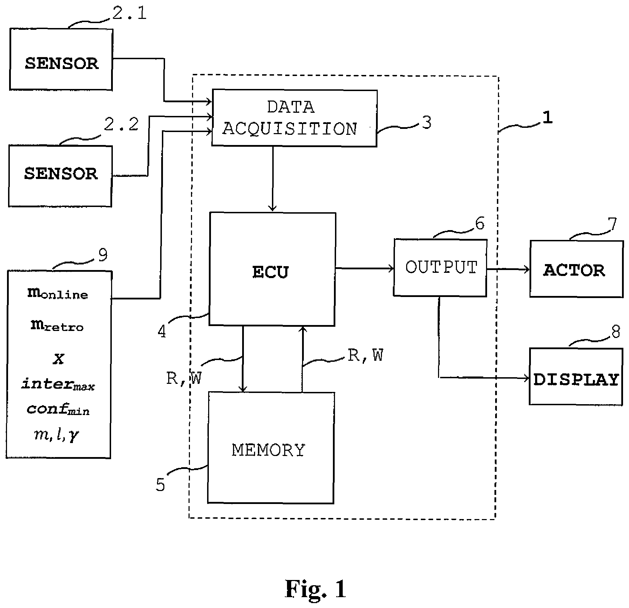

Fig. 1 shows a schematic of a system 1 according to an embodiment of the present invention. The system 1 classifies movement of a human based on time-series data received from a plurality of sensors 2.1, 2.1 and controls a powered exoskeleton (not shown) based on the result of the classification. The sensors 2.1, 2.1 are a part of an inertial measurement unit and measures linear and angular motions of at least one body segment of the human (user of the exoskeleton).

The time-series data generated by the sensors 2.1, 2.1 are received by a data acquisition unit 3 (data acquisition interface) and provided to an electronic control unit 4 (ECU) of the system 1, which stores the received time-series data in a memory 5 and accesses the stored data during real-time classification and its optimization. The electronic control unit 4 (ECU) detects the current movement by classifying the time-series data, determines control commands assigned to the classified/detected movement and outputs the commands, via an output unit 6 (output interface), to at least one actor 7 of the exoskeleton, so that the movement of exoskeleton is synchronized with the user's (intended) motion and/or the exoskeleton stabilizes movements of the user when lifting and holding heavy items. The actor 7 can be an electric motor, a pneumatic or hydraulic component of the exoskeleton. In addition, information on the classified movement and/or the command(s) can be output to a display 8 by the output unit 6 for user review/evaluation. The result of the evaluation can be input by a user interface (not shown) and can be used to trigger the self-training process which is described in more detail below. The data acquisition unit 3, user interface and the output unit 6 receive or transmit data by cable or wirelessly.

Before starting the classification, classification models $m_{online}$ and $m_{retro}$ trained based on labeled data X, the labeled data X and process parameters $inter_{max}$, $conf_{min}$, $m$, $l$ and $\gamma$ are acquired from a database 9 (server) or input by the manufacturer or user. The received real-time classification model $m_{online}$ is an offline model that is used, by the system 1, to classify the time-series data in real-time and that is periodically retrained with the labeled data and generated pseudo-labeled data in order to adapt the real-time classification model $m_{online}$ more and more to the user, i.e., to his behavior, preferences, and environment, during the use of the exoskeleton.

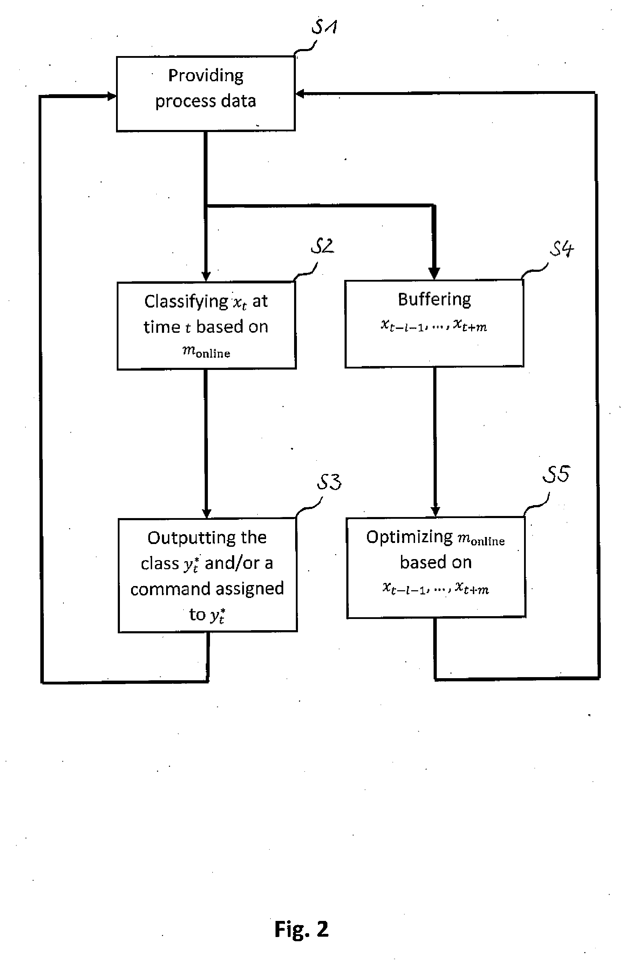

Fig. 2 shows a simplified flow chart of the inventive method. The process data (time-series data, $m_{online}$, $m_{retro}$, X, $inter_{max}$, $conf_{min}$, m, l and γ) to be used in the real-time classification and optimization process are provided in a first step Si. In step S2, the sensor data $x_t$ received at the current time $t$ are classified based on previous sensor data $x_{t-l-1}$, ..., $x_{t-1}$ (time-series data) and the real-time classification model $m_{online}$ provided in step Si. The determined class $y_t^*$ of the sensor data $x_t$ and/or a command assigned to the class $y_t^*$ is output in step $S_3$ and real-time classification is performed again as soon as next sensor data $x_{t+1}$ are received in order to classify it.

In step $S_4$, the time-series data are buffered to obtain subsequent sensor data $x_{t-1}$, ..., $x_{t+m}$ in addition to the sensor data $x_{t-l-1}$, ..., $x_t$. The real-time classification model $m_{online}$ is optimized by generating pseudo-labeled data $\hat{y}_t$ for the sensor data $x_t$ based on the labeled data X and the buffered time-series data $x_{t-l-1}$, ..., $x_{t+m}$ and retraining the real-time classification model $m_{online}$ based on the labeled data and the pseudo-labeled data $\hat{y}_t$, which will be described in more detail below. The retrained real-time classification model $m_{online}$ is set/provided in step Si for use in the real-time classification instead of the previous model $m_{online}$. All meta-parameters such as m, l can be set by the common practice of using an optimization algorithm such as grid search, random search on a labeled validation data set, wherein the validation data set can be a part of the initially labeled data X. In this way, determination of m, l would be part of the offline machine learning.

In the following, the more common offline time-series classification is described in general terms before being compared to its online counterpart.

Offline time-series classification is the major approach to classify time-series data. Typical applications are segmentation and tagging, enabling natural language based search for specific content in any sequential data, where video data is by far the most common one. Offline time-series classification on videos is also often used to detect suspicious behavior for surveillance purposes. The classification is done after the data has been recorded and the focus is to achieve the best classification performance possible, often disregarding the involved computational costs. Formally, given a time-series data set D := $\{x_1, x_2, x_3, ..., x_N\}$ composed of temporally ordered input vectors from time 1 to N, where $x_i \in \mathbb{R}^n$, the goal is to assign for each point in time the correct class among c different classes. In action classification, exemplary classes can correspond to motions such as walking, standing, bending etc. The classification can be framed as maximizing the posterior probability $p$ conditioned over all N feature vectors

$$y_t^* = \arg\max_{y_i \in \{1, ..., c\}} p(y_i | x_1, ..., x_N). \tag{1}$$

This corresponds to continuous offline classification on an unsegmented data stream. Even though there is some work tackling this task directly, most commonly the problem is further facilitated by assuming the data to be already divided into class-wise segments. In this case, the data set is given as $\tilde{D}$ := $\{(s_1, y_1), (s_2, y_2), ..., (s_k, y_k)\}$, where $s_i$ consists of all the consecutive input vectors belonging to the same category $y_i$, which is the i-th class in the data set. The corresponding classification is done on segment level

$$y_t^* = \arg\max_{y_i \in \{1, ..., c\}} p(y_i | s_i). \tag{2}$$

This prevents algorithms to incorporate inputs of adjacent classes in the feature space, which drastically simplifies the task. It is also common to transform each segment to the same length in order to simplify the encoding into equitized feature vectors.

In online time-series classification, it is assumed to have a continuous, potentially endless, stream $x_1, x_2, ..., x_t$ of feature vectors, where $x_i \in \mathbb{R}^n$. As $t$ is the current time, the goal is to assign the correct class for each $x_t$. Naturally, algorithms can only access the data stream until the current time t and the classification is done for each feature vector $x_i$ presented in temporal order. The task can be framed as maximizing the posterior probability $p$ in the form of

$$y_t^* = \underset{y_t \in \{1,\dots,c\}}{\arg\max} \, p(y_t|x_1,\dots,x_t). \qquad (3)$$

The stream $x_1, x_2, \dots, x_t$ is not partitioned and the embedded classes, such as the motion classes (Walking, Standing, Bending, etc.) can have a different length that varies over time.

The most common approach is to select feature vectors based on a sliding window of a predefined size w. The underlying assumption is that the most recent data is most relevant and that the last w feature vectors are sufficient for classification. As the data outside the sliding window is deemed irrelevant, the computational burden is drastically reduced

$$y_t^* = \underset{y_t \in \{1,\dots,c\}}{\arg\max} \, P(y_t|x_{t-w+1},\dots,x_t). \qquad (4)$$

Online time-series classification is notoriously more challenging than its offline counterpart because of the following reasons:

- The learning algorithm has only access to data until the current time t.
- The data is unsegmented leading to the simultaneous presence of data belonging to different classes within the sliding window, particularly at transitions between adjacent classes.
- The class-wise sub-sequences can have different lengths, which can vary over time.
- The available computational resources are strictly limited in order to provide a real-time classification.

In the system 1 shown in Fig. 1, the goal is to categorize human motions from the time-series data into classes such as walking, standing etc., and gradually improve the process through retrospective self-training. This is based on the fact that a model classifying with delay achieves a better performance as it has access to more information about the time-series. In particular, the additional information is temporally adjacent to the current time and thus likely relevant.

This principle is one of the underlying reasons that offline time-series classification yields often a better classification performance in comparison to online classification. The system 1 uses a blend between offline and online time-series classification, as it exploits the advantage of classifying in hindsight to estimate more accurate pseudo labels. In other words, the model $m_{retro}$ is trained with delay by the electronic control unit 4, using the self-training procedure, to generate pseudo labels that are subsequently used to improve the generalization capability of the online time-series classification model $m_{online}$.

Formally, a retrospective model $m_{retro}$ that is trained to classify the current input vector $x_t$ with a delay of m time units at time $t + m$:

$$\hat{y}_t = \underset{y_t \in \{1,\dots,c\}}{\arg\max} \, p(y_t|x_{t-l-1},\dots,x_{t+m}). \qquad (5)$$

The delay of m time units allows the model to leverage features after time t, which facilitates the task and therefore yields a better performance. In human action classification, it allows the model $m_{retro}$ to classify the current motion with information about how the motion progresses after the query time t. The sliding window size w is given as the sum of previous and post time steps the model accesses relative to the current time t, i.e. w = l + m. Such a model provides a blend between offline and online time-series classification on unsegmented data that can be flexibly parameterized by l and m.

In the following, the application of this model in a semi-supervised learning setting is described.

Given a labeled data set $X := \{(x_1,y_1), (x_2, y_2), \dots, (x_N, y_N)\}$ and an unlabeled data set $U := \{\tilde{x}_1, \tilde{x}_2, \dots, \tilde{x}_k\}$, a model $m_{retro}$ that minimizes the loss

$$L(X) = \frac{1}{N}\sum_{i=1}^{N} \mathbf{1}\left(\hat{y}_i \neq y_i\right) \qquad (6)$$

is constructed, where $\hat{y}_l$ is given by $m_{retro}$ as denoted by equation 5.

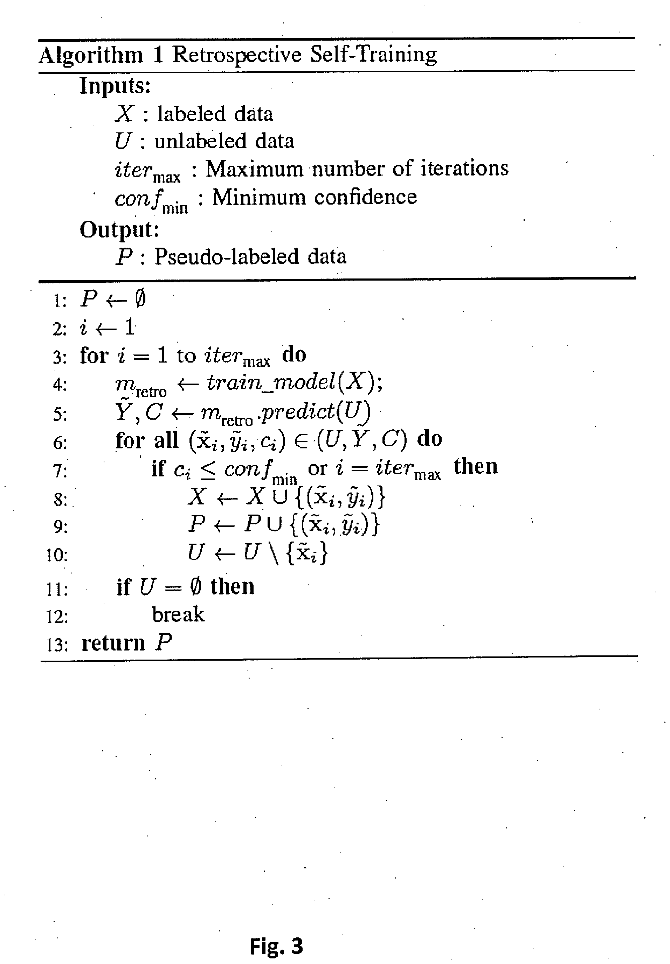

Based on the self-training procedure given in the first algorithm shown in Fig. 3, $m_{retro}$ is used to generate the pseudo-labeled data $X := \{(\tilde{x}_1, \tilde{y}_1), (\tilde{x}_2, \tilde{y}_2), \dots, (\tilde{x}_k, \tilde{y}_K)\}$ for the unlabeled data U. Concretely, $m_{retro}$ is retrained in an iterative way, every time transferring the data whose classification confidence surpasses a predefined threshold $conf_{min}$ from the unlabeled to the labeled set. The procedure is stopped either when all data has been transferred or after a predefined number of maximum iterations $inter_{max}$. In the latter case, all remaining unlabeled data are transferred to the labeled data set using the pseudo labels predicted in the last iteration. Note that for a set of inputs, the model prediction function returns the labels $\hat{Y}$ as well as the corresponding confidences $C$ (line 5 of the first algorithm).

Subsequently, the online time-series classification model $m_{online}$ is constructed by minimizing the training loss on the labeled and pseudo-labeled data

$$L(X, P) = \frac{1}{N}\sum_{i=1}^{N} \mathbf{1}\left(\hat{y}_i \neq y_i\right) + \frac{1}{K}\sum_{i=1}^{K} \mathbf{1}\left(\widehat{\tilde{y}_i}\tilde{y}_i\right) \tag{7}$$

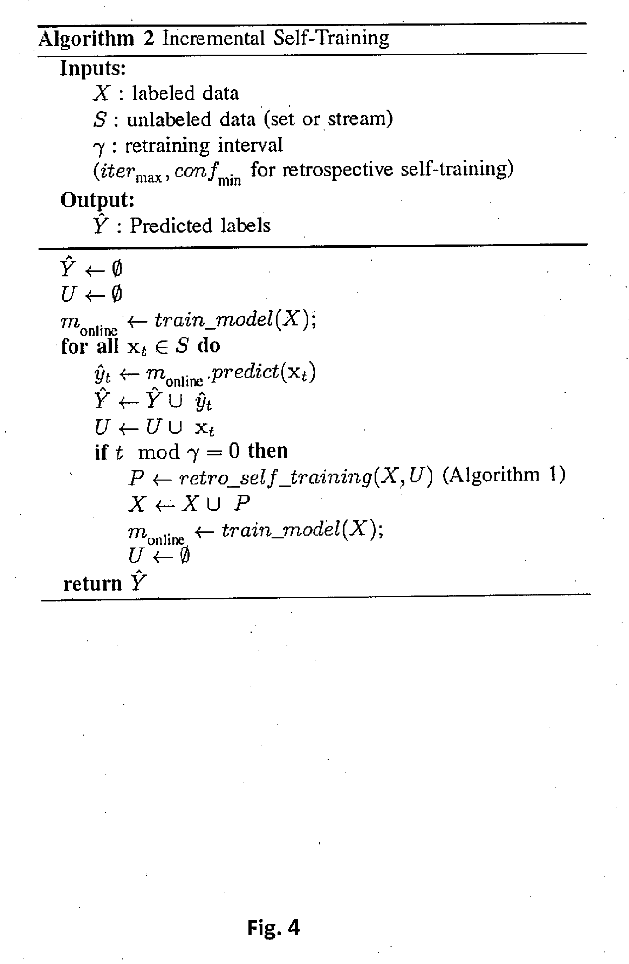

Note that $\hat{y}_i$ and $\widehat{\tilde{y}_i}$ are obtained in the real-time setting as given by equation 4. Fig. 4 shows a second algorithm for the incremental self-training performed by the electronic control unit 4.

$x_t$ represents the raw input vector at time t. The actual input vector of the online classification model $m_{online}$ is a feature map based on the sliding window of the recent w raw inputs $\varnothing_t = \varnothing(x_{t-w+1}, ..., x_t)$. In case of the retrospective model $m_{retro}$, the feature map is given as $\varnothing\tilde{o}_t = \varnothing\tilde{o}(x_{t-w+1}, ..., x_t)$, since it also considers inputs after time t. In order to keep the notation uncluttered, such details have been omitted in the depicted first and second algorithms. Whenever a raw input $x_t$ is processed by a classifier, the corresponding feature map $\varnothing_t$ or $\varnothing\tilde{o}_t$ is implicitly obtained.

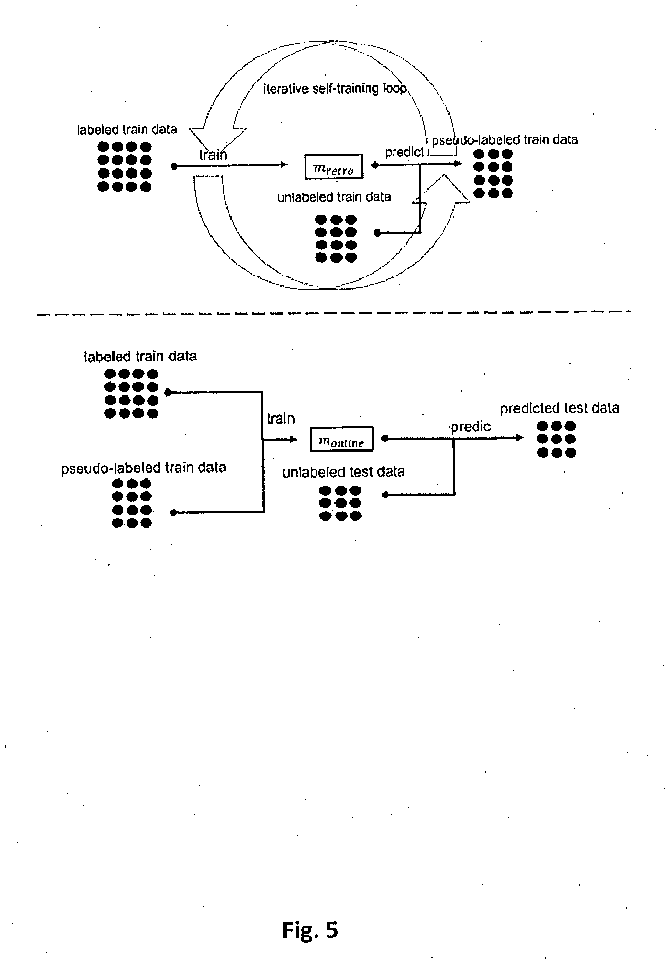

The approach is evaluated in the two following application schemes. In the first, the classical scheme of semi-supervised learning with self-training is used to obtain the pseudo labels, i.e., self-training is performed using $m_{retro}$ to determine the pseudo labels in hindsight, and then utilize them to improve the generalization ability of the online model $m_{online}$ as illustrated by Fig. 5. The upper half of Fig. 5 concerns generation of pseudo-labels from the retrospective model and the lower part regards training the online time-series model with labelled and pseudo-label data. Concretely, with a certain amount of labeled and unlabeled data, the goal is to generate a model that continuously classifies an incoming stream in real-time. Therefore, the retrospective model $m_{retro}$ is applied on the unlabeled data to obtain the pseudo labels and subsequently the online time-series classification model $m_{online}$ is trained based on the labeled and pseudo-labeled examples. Finally, the trained model is used on the test data stream. Note that such a scheme of two subsequent stages enables the retrospective model to perform the classification without any limit with respect to the classification delay or classification duration and is similar to offline time-series classification on unsegmented data.

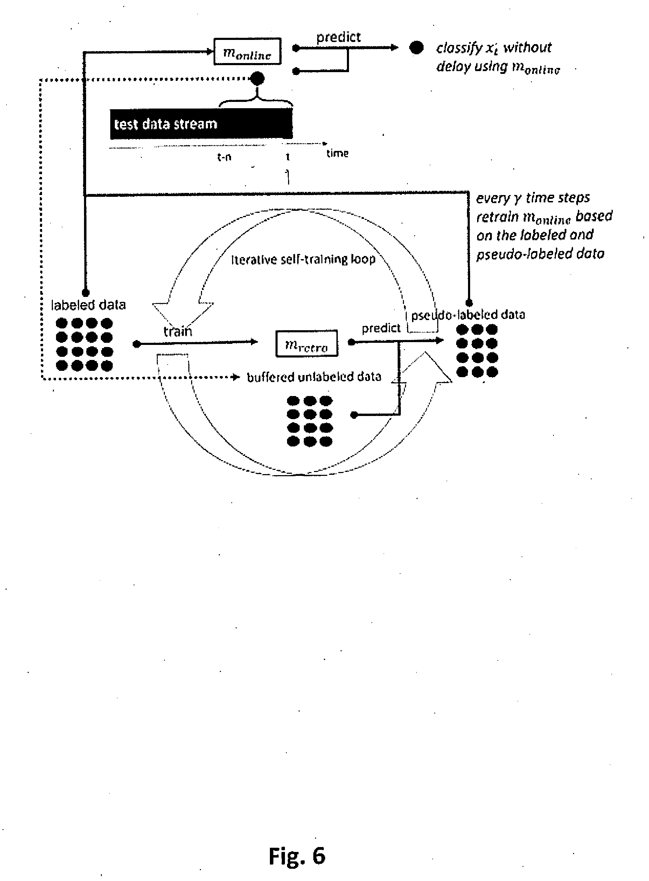

The second scheme shown in Fig. 6 is designed for a personalized use case where the online-time-series model $m_{online}$ is periodically retrained with an increasing amount of personalized pseudo-labeled data. It is inspired by a common problem of user-centered machine learning. Consider, for instance, an assisting device such as the exoskeleton or a prosthesis that uses the persons current action for high-level control. Machine learning models associated with such devices are usually pre-trained on large amounts of labeled data from many different subjects. In case of the end user though, the most relevant one, usually no labeled data is available. As human behavior, preferences and their environment can be quite unique, it may happen that some end users are not well represented in the training data, resulting in a poor performance of the pre-trained models. However, the unlabeled motion data of the customer can be collected as he or she is starting to use the product.

In particular, the unlabeled data is representing the test data, making it highly relevant.

The system 1 periodically generates new retrospective pseudo labels as more unlabeled data is collected and retrains the online time-series classification model $m_{online}$ based on the original training data and the growing set of personalized pseudo-labeled data. Fig. 6 provides an overview of the overall process and the exact procedure is given the second algorithm shown in Fig. 4.

As shown in Fig. 6, the retrospective model is periodically assigning pseudo-labels to the growing set of unlabeled data. Both, the retrospective model $m_{retro}$ and the online classification model $m_{online}$ are regularly retrained using the labeled and previously pseudo-labeled data. This incremental framework is used to achieve a personalization solely based on pseudo-labeled data.

At each retraining step, the pseudo labels until the current time t of the test subject are obtained using the retrospective self-training (first algorithm). Note that the retrospective retraining is performed with the retrospective model $m_{retro}$. This approach additionally requires the retraining of the online time-series classification model $m_{online}$ based on the labeled data as well as all retrospective pseudo-labeled data until the current time. Such a retraining scheme incorporates more and more subject-specific pseudo-labeled data, which leads to a continuous personalization.

Since the time series data is obtained during the use of the exoskeleton at the end user, the stream or set of unlabeled data $U$ is personalized, i.e. from a single subject. However, this has not to be the case as the algorithm provides a general procedure to achieve incremental learning based on regular retraining using a growing set of pseudo-labeled

data, i.e., $m_{online}$ can also be retrained/adapted to another user while he or she is using the exoskeleton. Compared to the previous scheme, the retrospective model is theoretically more restricted as its horizon to look ahead is bounded by the chosen interval to perform the periodic retraining. In practice, however, this usually can be neglected as the interval will be large enough to access all relevant time-series data in most cases.

Even though the approach is easily applicable, it comes at the cost of an increased computational burden as well as a higher system complexity due to the combination of two models, potentially relying on different sets of features. Particularly, the periodic retraining for the incremental personalization is computationally exhausting and the complexity increases as the amount of training data grows over time. The computational burden can be reduced by replacing the scheme of periodic retraining with online learning algorithms. However, whether online learning algorithms, which are often less stable, are benefiting from self-training has rarely been studied, yet.

There are several prerequisites for the applicability of the approach. For a given task at hand the following conditions must apply:

1) Classification in retrospective is not trivial
2) Online classification without delay
3) Classification in retrospective yields a better performance than online classification.

The first two conditions exclude alternative solutions that are preferable for certain scenarios. For instance, heuristic approaches are often sufficient to obtain a very accurate ground truth in retrospective for prediction tasks without a necessity of an additional model. In the case that a classification delay is acceptable (condition 2), a retrospective model could directly be used for classification. The last condition ensures that there is potential to improve the performance of the online time-series model using retrospective pseudo labels, otherwise common self-training is preferable due to the reduced complexity.

Self-learning strategies that can be adapted to online time series classification and combined with the approach to provide additional benefits are described below.

Classical Self-training assigns pseudo labels in an incremental way, retraining the model multiple times, thereby adopting more and more pseudo-labeled data into the training set using the classifiers confidence as filter criterion. This process is repeated until all pseudo-labeled data has been used for training. Various extensions have been suggested such as improving the data filtering based on different criteria, or increasing the generalization ability based on ensemble methods. Ensembles have also been used to improve the confidence estimation required for the filtering. A prominent variation of self-training is co-training, which proposes to train multiple models on non-overlapping subspaces for determining the pseudo labels. It has been proven that such a scheme results in fewer generalization errors, provided that all sub-space classifiers are using conditionally independent features.

Self-Labeling techniques, in particular self-training, have been recently explored in the context of deep learning. In A. Krasoulis, S. Vijayakumar, and K. Nazarpour, "Multi-grip classification-based prosthesis control with two emg-imu sensors" IEEE Transactions on Neural Systems and Rehabilitation Engineering, vol. 28, no. 2, pp. 508-518, 2019, pseudo labels are not assigned in multiple retraining runs, since this computationally inefficient scheme is particularly severe in the context of deep learning. Instead, pseudo labels are generated for all unsupervised data after each training epoch and considered within a weighted loss together with the supervised data. The weight of the pseudo-labeled data is increased over the number of training epochs, leading to a lower error on the MNIST data set particularly for small amounts of labeled data.

Ensembles based on networks with different regularization parameters have been explored in the context of self-training in S. Laine and T. Aila, "Temporal ensembling for semi-supervised learning" arXiv preprint arXiv: 1610.02242, 2016. The authors also include the temporal history of the pseudo labels over different training epochs for the predictions and report significant improvements on multiple semi-supervised learning benchmarks.

An iterative self-training approach is described in Q. Xie, M.-T. Luong, E. Hovy, and Q. V. Le, "Self-training with noisy student improves imagenet classification", in Proceedings of the conference CVPR, 2020, pp. 10 687-10 698, where a complete retraining is performed for each iteration, achieved superior results on the ImageNet benchmark. In contrast to classical self-training, the authors use the pseudo labels for all unlabeled examples at each iteration. Their main observation is that adding noise in the step of retraining with the pseudo labeled examples is beneficial, whereas it is detrimental for pseudo-label prediction.

In Y. Zou, Z. Yu, B. Kumar, and J. Wang, "Unsupervised domain adaptation for semantic segmentation via class-balanced self-training", in Proceedings of ECCV, 2018, pp. 289-305, a class-balanced loss has been evaluated to deal with class imbalances. More specifically, the authors use a class-balanced loss with spatial priors for the task of vision-based semantic segmentation, resulting in an improved generalization ability across different city-image data sets.

In J. He, J. Gu, J. Shen, and M. Ranzato, "Revisiting self-training for neural sequence generation," arXiv preprint arXiv:1909.13788, 2019., self-training was applied on sequential data in the context of sequence generation and classification, wherein self-training was combined with dropout and injected noise on a language translation task. The authors suggest that the effect of local smoothness is enforced when perturbations are added during training in order to explain the performance gain. In J. Kahn, A. Lee, and A. Hannun, "Self-training for end-to-end speech recognition", in IEEE International Conference on Acoustics, Speech and Signal Processing (ICASSP), 2020, pp. 7084-7088, self-training is used for end-to-end speech recognition. Specifically, the authors propose a heuristic filtering strategy in combination with an ensemble approach to get improved results.

**Claims**

1. A computer-implemented method performed by an apparatus (1) for classifying time-series data, comprising the steps of:

   classifying (S2) the time-series data by real-time classification using a real-time classification model pre-trained based on labeled data;
   buffering (S4) the time-series data that has already been classified by the real-time classification; and
   optimizing (S5) the real-time classification model during the real-time classification by

   - generating pseudo-labeled data by semi-supervised learning based on the labeled data and the buffered time-series data; and
   - retraining the real-time classification model based on the labeled data and the pseudo-labeled data.

2. The method according to claim 1, wherein
   the pseudo-labeled data are generated by an iterative self-training process.

3. The method according to claim 2, wherein
   in the iterative self-training process, a retrospective model that classifies a sample $\tilde{x}_t$ of the buffered time-series data based on the labeled data and samples $\tilde{x}_{t-l}, \ldots, \tilde{x}_t, \ldots, \tilde{x}_{t+m}$ of the buffered time-series data is retrained, where $m$ and $l$ are predetermined parameters.

4. The method according to claim 3, wherein
   the retrospective model is retrained every time classification confidence of the time-series data classified by the retrospective model surpasses a predefined threshold.

5. The method according to any one of claims 2 to 4, wherein
   the iterative self-training process is stopped when all buffered time-series data have been classified or after a predefined number of maximum iterations.

6. The method according to any one of claims 1 to 5, wherein
   the generation of the pseudo-labeled data is triggered periodically at certain times.

7. The method according to any one of claims 1 to 6, further comprising

   a step of evaluating the real-time classification, wherein
   the generation of the pseudo-labeled data is triggered based on the result of the evaluation.

8. The method according to any one of claims 1 to 7, further comprising

   a step of generating the time-series data by an inertial measurement unit measuring linear and/or angular motions of at least one human body segment, wherein
   in the classifying step, the current movement that the human is performing or an upcoming movement of the human is classified.

9. The method according to claim 8, further comprising
   a step of controlling an exoskeleton or an electric prosthesis based on the result of the classification.

10. The method according to any one of claims 1 to 9, further comprising
    a step of outputting the result of the classification.

11. A program that, when running on a computer or loaded onto a computer, causes the computer to execute the steps of the method according to any one of the preceding claims.

12. A system for classifying time-series data, comprising

means (4) for classifying the time-series data by a real-time classification using a real-time classification model pre-trained based on labeled data;
means (5) for buffering the time-series data that has already been classified by the real-time classification; and
means (4) for optimizing the real-time classification model during the real-time classification, wherein the optimizing means (4) is configured to generate pseudo-labeled data by semi-supervised learning based on the labeled data and the buffered time-series data and to retrain the real-time classification model based on the labeled data and the pseudo-labeled data.

13. The system according to claim 12, further comprising

an inertial measurement unit (2.1, 2.2) for continuous measurement of linear and/or angular motions performed by at least one human body segment and generating the time-series data based on the continuous measurement, wherein
the classifying means (4) is configured to classify the current movement that the human is performing or an upcoming movement of the human.

14. The system according to claim 13, further comprising

an exoskeleton or an electric prosthesis; and
a control means (4) for controlling the exoskeleton or the electric prosthesis based on the result of the classification.

**Fig. 1**

*S1*

Providing
process data

*S2*

Classifying $x_t$ at
time $t$ based on
$m_{online}$

*S4*

Buffering

$x_{t-l-1}, ..., x_{t+m}$

*S3*

Outputting the
class $y_t^*$ and/or a
command assigned
to $y_t^*$

*S5*

Optimizing $m_{online}$
based on

$x_{t-l-1}, ..., x_{t+m}$

**Fig. 2**

**Algorithm 1** Retrospective Self-Training

**Inputs:**

    $X$ : labeled data

    $U$ : unlabeled data

    $iter_{max}$ : Maximum number of iterations

    $conf_{min}$ : Minimum confidence

**Output:**

    $P$ : Pseudo-labeled data

1: $P \leftarrow \emptyset$

2: $i \leftarrow 1$

3: **for** $i = 1$ to $iter_{max}$ **do**

4:     $m_{retro} \leftarrow train\_model(X)$;

5:     $\tilde{Y}, C \leftarrow m_{retro}.predict(U)$

6:     **for all** $(\tilde{x}_i, \tilde{y}_i, c_i) \in (U, \tilde{Y}, C)$ **do**

7:         **if** $c_i \leq conf_{min}$ or $i = iter_{max}$ **then**

8:             $X \leftarrow X \cup \{(\tilde{x}_i, \tilde{y}_i)\}$

9:             $P \leftarrow P \cup \{(\tilde{x}_i, \tilde{y}_i)\}$

10:            $U \leftarrow U \setminus \{\tilde{x}_i\}$

11:     **if** $U = \emptyset$ **then**

12:         break

13: **return** $P$

**Fig. 3**

---

**Algorithm 2** Incremental Self-Training

---

**Inputs:**
    $X$ : labeled data
    $S$ : unlabeled data (set or stream)
    $\gamma$ : retraining interval
    $(iter_{\max}, conf_{\min}$ for retrospective self-training)
**Output:**
    $\hat{Y}$ : Predicted labels

---

$\hat{Y} \leftarrow \emptyset$
$U \leftarrow \emptyset$
$m_{\text{online}} \leftarrow train\_model(X)$;
**for all** $x_t \in S$ **do**
    $\hat{y}_t \leftarrow m_{\text{online}}.predict(x_t)$
    $\hat{Y} \leftarrow \hat{Y} \cup \hat{y}_t$
    $U \leftarrow U \cup x_t$
    **if** $t \bmod \gamma = 0$ **then**
        $P \leftarrow retro\_self\_training(X, U)$ (Algorithm 1)
        $X \leftarrow X \cup P$
        $m_{\text{online}} \leftarrow train\_model(X)$;
        $U \leftarrow \emptyset$
**return** $\hat{Y}$

---

**Fig. 4**

labeled train data

iterative self-training loop

train

$m_{retro}$

predict

pseudo-labeled train data

unlabeled train data

labeled train data

train

$m_{online}$

predict

predicted test data

pseudo-labeled train data

unlabeled test data

**Fig. 5**

**Fig. 6**

Europäisches
Patentamt

European
Patent Office

Office européen
des brevets

## EUROPEAN SEARCH REPORT

**Application Number**

EP 22 20 7426

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/246989 A1 (GENOV ROMAN [CA] ET AL) 15 August 2019 (2019-08-15) <br> * paragraph [0046] - paragraph [0077] * <br> * figures 2-4 * <br> ----- | 1-14 | INV. <br> G06N3/0895 <br> G06N3/09 <br> G06N20/00 |
| A | GONZÁLEZ MABEL ET AL: "Self-labeling techniques for semi-supervised time series classification: an empirical study", KNOWLEDGE AND INFORMATION SYSTEMS, SPRINGER VERLAG, LONDON, GB, vol. 55, no. 2, 8 August 2017 (2017-08-08), pages 493-528, XP036462701, ISSN: 0219-1377, DOI: 10.1007/S10115-017-1090-9 [retrieved on 2017-08-08] * the whole document * <br> ----- | 1,11,12 | |
| A,D | KRASOULIS AGAMEMNON ET AL: "Multi-Grip Classification-Based Prosthesis Control With Two EMG-IMU Sensors", IEEE TRANSACTIONS ON NEURAL SYSTEMS AND REHABILITATION ENGINEERING, IEEE, USA, vol. 28, no. 2, 13 December 2019 (2019-12-13), pages 508-518, XP011772103, ISSN: 1534-4320, DOI: 10.1109/TNSRE.2019.2959243 [retrieved on 2020-02-11] * the whole document * <br> ----- | 8,9,13, 14 | |

**TECHNICAL FIELDS SEARCHED (IPC)**

G06N

The present search report has been drawn up for all claims

| Place of search | Date of completion of the search | Examiner |
|---|---|---|
| The Hague | 29 March 2023 | Baldan, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 195 109 A1**

## ANNEX TO THE EUROPEAN SEARCH REPORT
## ON EUROPEAN PATENT APPLICATION NO.

EP 22 20 7426

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2023

| Patent document cited in search report | Publication date | Patent family member(s) | Publication date |
|---|---|---|---|
| US 2019246989 A1 | 15-08-2019 | CA 3091611 A1<br>EP 3749190 A1<br>US 2019246989 A1<br>US 2020397383 A1<br>WO 2019153094 A1 | 15-08-2019<br>16-12-2020<br>15-08-2019<br>24-12-2020<br>15-08-2019 |

For more details about this annex : see Official Journal of the European Patent Office, No. 12/82

18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. KRASOULIS ; S. VIJAYAKUMAR ; K. NAZARPOUR.** Multi-grip classification-based prosthesis control with two emg-imu sensors. *IEEE Transactions on Neural Systems and Rehabilitation Engineering,* 2019, vol. 28 (2), 508-518
- **S. LAINE ; T. AILA.** Temporal ensembling for semi-supervised learning. *arXiv: 1610.02242,* 2016
- **Q. XIE ; M.-T. LUONG ; E. HOVY ; Q. V. LE.** Self-training with noisy student improves imagenet classification. *Proceedings of the conference CVPR,* 2020, vol. 10, 687-10
- **Y. ZOU ; Z. YU ; B. KUMAR ; J. WANG.** Unsupervised domain adaptation for semantic segmentation via class-balanced self-training. *Proceedings of ECCV,* 2018, 289-305
- **J. HE ; J. GU ; J. SHEN ; M. RANZATO.** Revisiting self-training for neural sequence generation. *arXiv:1909.13788,* 2019
- **J. KAHN ; A. LEE ; A. HANNUN.** Self-training for end-to-end speech recognition. *IEEE International Conference on Acoustics, Speech and Signal Processing (ICASSP),* 2020, 7084-7088